# EUROPEAN PATENT APPLICATION

(11) **EP 3 459 491 A1**
(43) Date of publication of application: **27.03.2019**
(21) Application number: 17889529.8
(22) Date of filing: 29.06.2017
(51) Int. Cl.: A61C 13/00

(54) **SCALE**

(71) Applicant: GC Corporation, Sunto-gun, Shizuoka 410-1307 (JP)
(72) Inventor: MORI, Daizaburo, Tokyo 174-8585 (JP); YOSHINAGA, Masatoshi, Tokyo 174-8585 (JP); SATO, Takuya, Tokyo 174-8585 (JP); MASHIO, Go, Tokyo 174-8585 (JP); YOKOHARA, Hayato, Tokyo 174-8585 (JP); HOSHINO, Tomohiro, Tokyo 174-8585 (JP); MIYAKE, Takahiro, Tokyo 174-8585 (JP)
(74) Representative: Müller-Boré & Partner Patentanwälte PartG mbB
(86) International application number: PCT/JP2017/023977
(87) International publication number: WO 2019/003388

(57) **Abstract**

To provide a scale which makes it possible to adjust the temperature of a furnace so that a ceramic blank can be properly heated even if various conditions such as the combination of the used ceramic blank and investment, and the type and size of the furnace vary, the scale comprises: a scale part; and a base part, the scale part and the base part being formed of wax or resin, wherein the base part has a shape of protruding from part of the scale part, a size of the scale part is larger than that of the base part in a direction orthogonal to a protruding direction of the base part.

## Description

### FIELD

The present invention relates to scales used when dental prostheses are made by pressing.

### BACKGROUND

If a tooth is partially removed or lost by dental treatment or the like, a dental prosthesis is arranged on a cavity due to this removal or loss because the tooth does not naturally recover from the removal or loss. While metal is conventionally used as material for a dental prosthesis, ceramic dental prostheses have been increasingly used in recent years in view of aesthetics.

For example, a ceramic dental prosthesis is made according to the following procedures:
first, a wax pattern that is shaped so as to correspond to the shape of a dental prosthesis to be formed is secured to a crucible former (wax model upright holder for making a mold of a dental prosthesis) via a sprue line that is shaped so as to correspond to a sprue line portion described later, to be invested in investment; then, after the investment is cured, the crucible former is removed, and the wax pattern and the sprue line are burned, to form a mold.

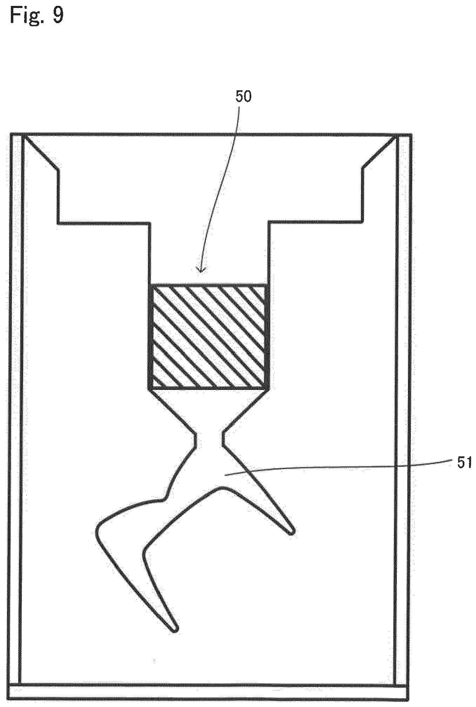

After the mold is formed, as shown in Fig. 9, a ceramic blank 50 is arranged in a sprue, heated, and pressed by, for example, a piston. Whereby, a space 51 having a shape corresponding to the dental prosthesis is filled with a ceramic material, which formed the ceramic blank, from the sprue via the sprue line part, which makes it possible to produce a ceramic dental prosthesis of the desired shape (for example, see Patent Literatures 1 and 2).

The ceramic blank softens due to heating, but its fluidity is low, unlike molten metal. Then, it is necessary to carry out both heating, and pressing by a piston in order to fill the space 51 having a shape corresponding to the dental prosthesis with the ceramic material, which formed the ceramic blank 50 arranged in the sprue as described above.

### Citation List

### Patent Literature

Patent Literature 1: WO 01/021088 A1
Patent Literature 2: WO 2015/125807 A1

### SUMMARY

### Technical Problem

However, when a dental prosthesis is made according to a producing method as Patent Literature 1 or 2, there is a problem with filling the mold with the ceramic blank. Specifically, unless the mold is filled with a sufficient ceramic material, a dental prosthesis having the shape to be aimed cannot be obtained. It is necessary for filling the mold with the ceramic material like the above that the ceramic material properly flow in the mold. Therefor, the temperature of heating the ceramic blank is important. The temperature of heating the ceramic blank is approximately grasped for each material, and it seems as if setting a furnace at this temperature did not cause a problem.

However, the temperature at which the ceramic blank is actually heated sometimes changes according to various conditions such as the combination of the used ceramic material and investment, and the type and size of the furnace, which may lead to insufficient filling of the mold with the ceramic material, to make it impossible to obtain a dental prosthesis of the shape to be aimed. That is, just setting the furnace at a predetermined temperature as indicated does not always make it possible to heat the ceramic blank at a proper temperature, which is problematic.

An object of the present invention is to provide a scale which makes it possible to adjust the temperature of a furnace so that a ceramic blank can be properly heated even if various conditions such as the combination of the used ceramic blank and investment, and the type and size of the furnace vary.

### Solution to Problem

Hereinafter the present invention will be described. Here, reference numerals added to the drawings are also described in parentheses for easy understanding. However, the present invention is not limited to them.

One aspect of the present invention is a scale (10) that is for adjusting temperature of a furnace that heats a ceramic blank used in press molding of a dental prosthesis, the scale comprising: a scale part (11); and a base part (12), the scale part and the base part being formed of wax or resin, wherein the base part has a shape of protruding from part of the scale part, a size of the scale part is larger than that of the base part in a direction orthogonal to a protruding direction of the base part.

In the scale, the scale part (11) may have a shape of a grid.

### Advantageous Effects

The present invention makes it possible to adjust the temperature of a furnace so that a ceramic blank can be properly heated even if various conditions such as the combination of the used ceramic blank and investment, and the type and size of the furnace vary. Whereby, heating a ceramic blank can lead to proper filling with the ceramic blank when a dental prosthesis is made by press molding.

### BRIEF DESCRIPTION OF DRAWINGS

Fig. 1A is a plan view of a scale 10, and Fig. 1B is a side view of the scale 10.
Fig. 2 is a perspective view of a scale mold 20.
Fig. 3 is an explanatory view of an example of using the scale 10.
Fig. 4 is an explanatory view of the example of using the scale 10.
Fig. 5 is an explanatory view of the example of using the scale 10.
Fig. 6 is an explanatory view of the example of using the scale 10.
Fig. 7 shows a form of a ceramic molding obtained from a ceramic blank that was heated at a proper temperature.
Figs. 8A and 8B show forms of ceramic moldings obtained from ceramic blanks that were heated at improper temperatures.
Fig. 9 is an explanatory view of press molding of a ceramic material.

### DETAILED DESCRIPTION OF EMBODIMENTS

Hereinafter the present invention will be described based on the embodiments shown in drawings. The present invention is not limited to these embodiments.

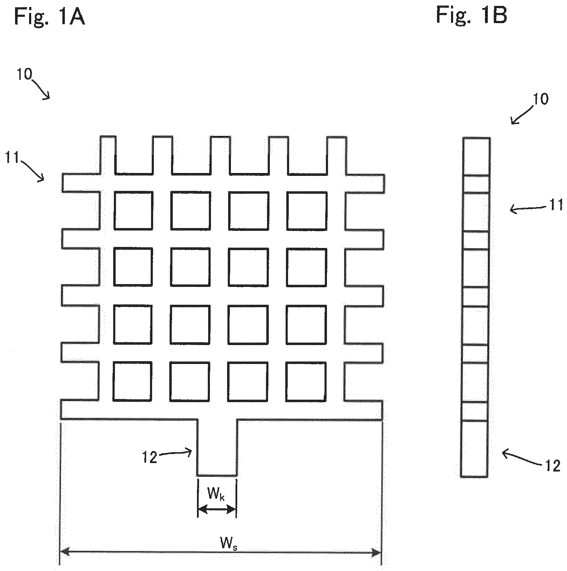

Fig. 1A is a plan view of a scale 10 according to one embodiment. Fig. 1B is a side view of the scale 10. As can be seen from Figs. 1A and 1B, the scale 10 of this embodiment has a boardlike shape as a whole, and is configured to have a scale part 11 and a base part 12.

The scale 10 is formed so that the base part 12 protrudes from part of the scale part 11, and so that a size Ws of the scale part 11 is larger than a size Wk of the base part 12: the size Wk is a size in a direction orthogonal to a direction in which the base part 12 protrudes (width direction); and the size Ws is a size in a direction parallel to the width direction of the base part 12, in plan view. Whereby, the scale 10 is in a proper mode as a scale for press molding.

The scale 10 like this is formed of wax or resin, which preferably vanishes due to melting or burning at a temperature within the range of 50°C to 500°C.

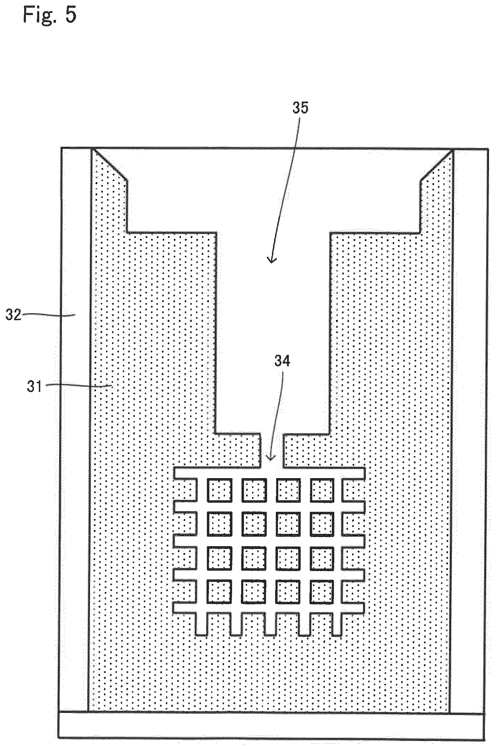

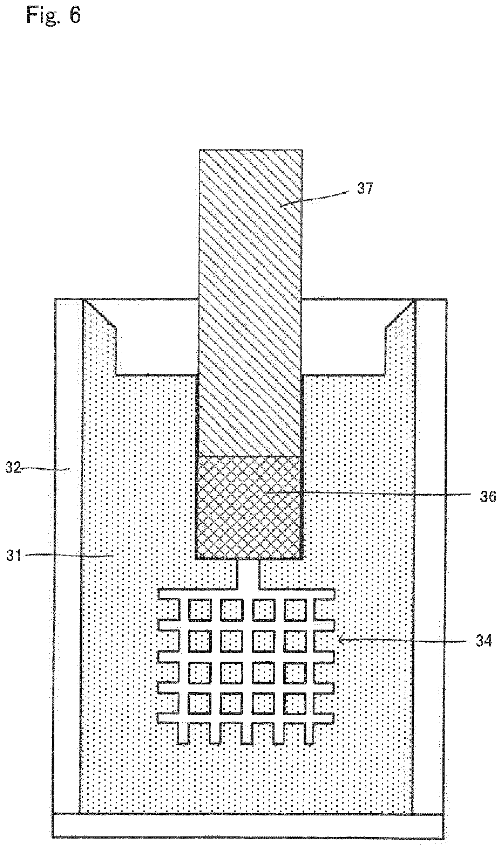

The specific shape of the scale part 11 is not limited. However, as described later, a flow path formed by the scale, where a ceramic material flows, preferably has a predetermined resistance (flow resistance) against flowing of the ceramic material. Whereby, a state of filling a mold 34 formed by the scale (see Figs. 5 and 6) with the ceramic material can be properly correlated with temperature.

From such a point of view, in this embodiment, the scale part 11 is in the form of a grid. Further, the form of a grid can make it possible to visually measure filling with the ceramic material using the number of cells of the grid without specifically measuring the volume, which can lead to easier determination that the temperature is proper or improper.

The cross-sectional shape of each of the scale part 11 and the base part 12 is not specifically limited as well, may be a quadrilateral, and may be a round. In this embodiment, as can be seen from Fig. 1B, the scale part 11 has a quadrilateral cross section, and is in the form of a grid.

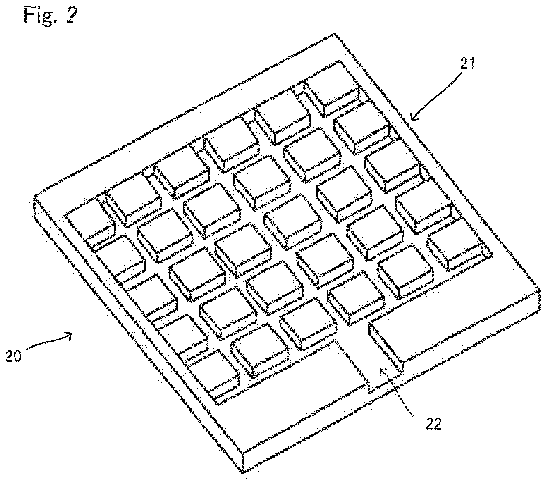

For example, the scale 10 like this can be made as follows. Fig. 2 is a perspective view of a scale mold 20 that is a mold for making the scale 10.

As can be seen from Fig. 2, the scale mold 20 is a boardlike member for making the scale 10. A pattern groove 21 that is grooves of a predetermined pattern, and a groove for the base part 22 are formed over one face side of the scale mold 20. The scale 10 can be made by pouring material into these pattern groove 21 and groove for the base part 22, to solidify the material. Examples of the material include wax and resin. Thus, specific patterns of the pattern groove 21 and the groove for the base part 22, and the cross-sectional shapes of the grooves themselves correspond to the form of the scale 10 to be made.

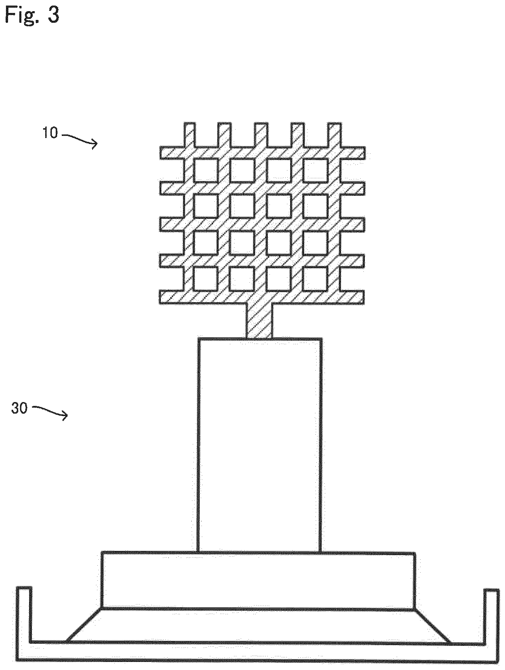

For example, the scale 10 as described above is used as follows. Figs. 3 to 8B are explanatory views.

First, as shown in Fig. 3, the scale 10 is attached to an end of a crucible former 30 (wax model upright holder for making a mold of a dental prosthesis).

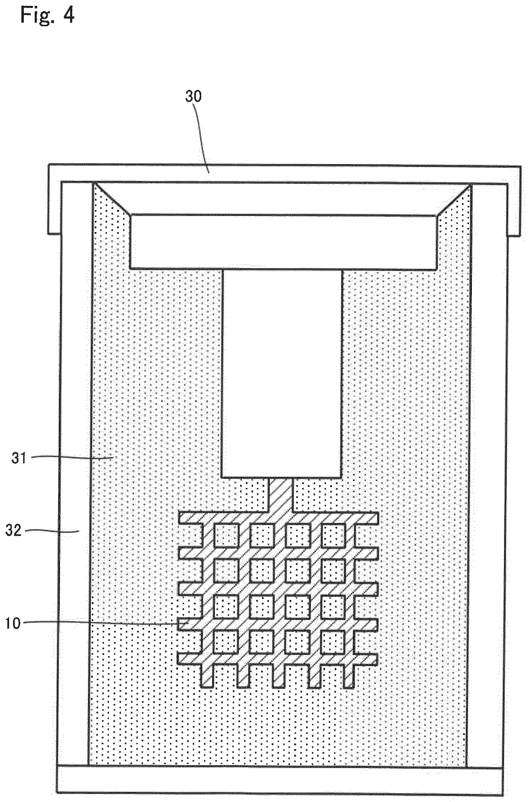

Next, as shown in Fig. 4, the crucible former 30 where the scale 10 is held upright is inserted in investment 31 before cured, which is in a container 32, so that the scale 10 is on the lower side. Then, the investment 31 is cured by a proper means.

After that, the container 32 that contains the cured investment 31, the crucible former 30, and the scale 10 is heated, and as shown in Fig. 5, the scale 10 is vanished by melting or burning. At this time, the crucible former 30 is also removed. If the scale 10 is molten, wax or resin that formed the scale 10 is drained. Whereby, the mold 34 that corresponds to the form of the scale 10 is formed. After the crucible former 30 is removed, a hole 35 that corresponds to the outer circumference of the crucible former 30 is formed. This hole 35 communicates with the mold 34 at the bottom thereof.

Next, as shown in Fig. 6, a ceramic blank 36 that was heated in a furnace at a predetermined temperature is inserted through the hole 35, pressed by a piston 37 from the top, and thrusted toward the mold 34.

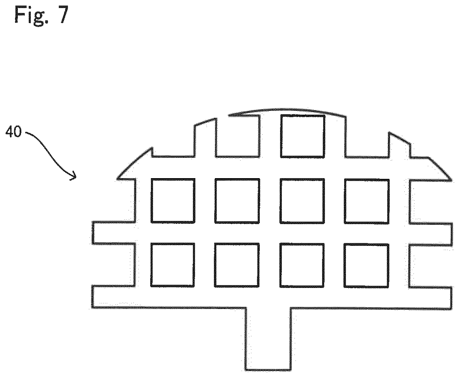

Whereby, the ceramic blank 36 flows in the mold 34, and a ceramic molding 40 as shown in Fig. 7 can be obtained. Fig. 7 shows the form of the ceramic molding 40 when the mold 34 is filled with the ceramic blank 36 that was heated in the furnace at a proper temperature.

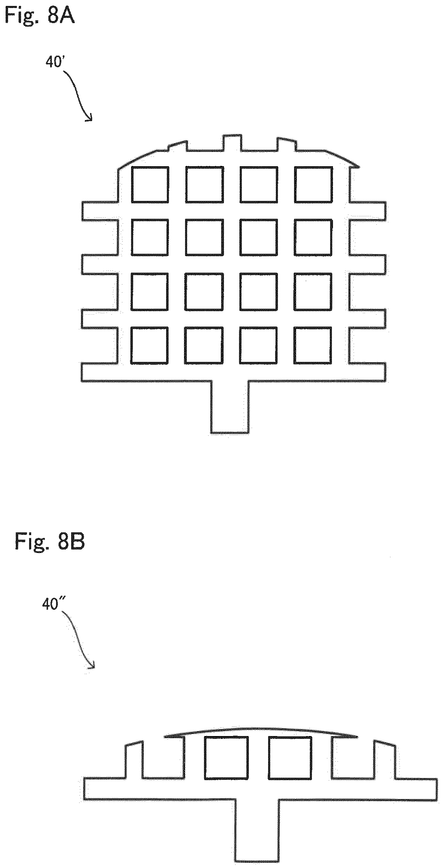

In contrast, Figs. 8A and 8B show the forms of ceramic moldings 40' and 40" when the ceramic blanks 36 that were heated in the furnace of improper temperatures are used. Fig. 8A shows an example where the temperature of the furnace is higher than a proper temperature, and Fig. 8B shows an example where the temperature of the furnace is lower than a proper temperature. In the example shown in Fig. 8A, the ceramic material flows too much, and in the example shown in Fig. 8B, flowing of the ceramic material is insufficient.

For example, in the examples shown in Figs. 7, 8A and 8B, there is a case where heating is carried out in different furnaces, and the indicated temperatures of the furnaces are the same in all the examples. That is, there is a case where heating employing the temperature of the furnace as indicated does not always result in heating at a proper temperature. Therefore, it is predicted that using such a furnace as it is for making a dental prosthesis by press molding may lead to an improper shape of the dental prosthesis.

For this, in the case of Fig. 8A or 8B, the indicated temperature of the furnace may be changed so that the shape as shown in Fig. 7 is obtained. In this case, the indicated temperature of the furnace is different from a determined temperature. However, it can be said that the inside of the furnace is at a proper temperature.

As described above, using the scale 10 makes it possible to adjust the temperature of the furnace so that the ceramic blank can be properly heated.

### Reference Signs List

10 scale
11 scale part
12 base part
20 scale mold
21 pattern groove
22 groove for base part
30 crucible former
31 investment
32 container
34 mold
35 hole
36 ceramic blank
37 piston
40, 40', 40" ceramic molding

## Claims

1. A scale that is for adjusting temperature of a furnace that heats a ceramic blank used in press molding of a dental prosthesis, the scale comprising:
a scale part; and a base part, the scale part and the base part being formed of wax or resin, wherein
the base part has a shape of protruding from part of the scale part, a size of the scale part is larger than that of the base part in a direction orthogonal to a protruding direction of the base part.

2. The scale according to claim 1, wherein the scale part has a shape of a grid.
